# EUROPEAN PATENT APPLICATION

(11) **EP 4 628 464 A1**
(43) Date of publication of application: **08.10.2025**
(21) Application number: 24192631.0
(22) Date of filing: 02.08.2024
(51) Int. Cl.: C04B 7/04, C04B 7/24

(54) **METHOD OF PRODUCING CEMENT CLINKER FROM A RAW MATERIAL COMPRISING A SOURCE OF CALCIUM SULFATE**

(30) Priority: 04.04.2024 EP 24020105
(71) Applicant: Holcim Technology Ltd, 6300 Zug (CH)
(72) Inventor: STOFFEL, Beat, 5113 Holderbank (CH); SEYLER, Laurent, 5113 Holderbank (CH); BOES, Karl-Heinz, 5113 Holderbank (CH); HAMER, Bastiaan, 5113 Holderbank (CH)
(74) Representative: SONN Patentanwälte GmbH & Co KG

(57) **Abstract**

A method of producing calcium oxide from a raw material (3) comprising a source of calcium sulfate, comprising
- a first step of reducing a first portion of the calcium sulfate in the presence of a reducing agent (6) in a reduction reactor (1) to obtain calcium sulfide, wherein the reducing agent comprises hydrogen, and subsequently
- a second step of reacting the calcium sulfide and a second portion of the calcium sulfate with each other to obtain calcium oxide and sulfur dioxide.

## Description

The invention refers to a method of producing calcium oxide from a raw material comprising a source of calcium sulfate.

The production of Portland clinker is traditionally done by preparing a raw meal that comprises limestone and raw clays, and calcining this raw material in a rotary kiln at a temperature of around 1'450°C. During this calcination step, the calcium carbonate in the limestone decarbonates to form carbon dioxide and calcium oxide. Furthermore, the rotary kiln used for the production of Portland clinker is heated by a burner, which produces heat from burning carbon-containing materials, such as fuels and waste materials, which also produces carbon dioxide. These two processes run simultaneously in a Portland clinker manufacturing plant, and produce high amounts of carbon dioxide.

An alternative method of production of Portland clinker that does not require the use of calcium carbonate materials is based on the Müller Kühne (MK) process, wherein a source of calcium sulfates is used as a starting material. In the MK-process calcium sulfate, for example in the form of gypsum, is reduced to calcium sulfide which reacts with calcium sulfate to give sulfur dioxide and calcium oxide, the latter being the main material to obtain cement. The MK-process takes place at temperatures of around 800°C and above, and requires a source of carbon, such as coke, which acts as a reducing agent. The calcium oxide resulting from the MK-process is further processed to obtain cement clinker.

US 2022/0204403 A1 discloses a method of producing cement and co-producing sulfuric acid from phosphogypsum.

EP 728713 B1 discloses a process where calcium sulfate materials are mixed with reactive carbon, and calcined at a first temperature of over 700°C so as to obtain calcium oxide, and the calcium oxide is then calcined at a temperature of over 1200°C in the presence of silica, alumina and iron oxide to obtain clinker. The SO₂ containing flue gas is then treated to be converted to SO₃ to produce sulfuric acid.

DE 19625538 B4 discloses a method of producing Portland cement and sulfuric acid by the MK-process, wherein waste gypsum board and other gypsum rubble are used as a source of calcium sulfate. The waste gypsum boards are pre-reduced to a uniform mill-processable edge length, sorted and freed from foreign materials such as wood, steel and plastic pieces, ground to powder fineness under throttled air suction, mixed with other cement starting material powder components and, after optional intermediate storage, processed in the rotary kiln to form cement clinker.

In the known methods of producing cement based on the MK-process, carbon is used as a reducing agent to convert calcium sulfate to calcium sulfide, thereby producing carbon dioxide. However, in an effort to reduce the carbon footprint of cement manufacturing, carbon dioxide is an undesirable product.

Therefore, the present invention aims at improving a method of producing calcium oxide or cement clinker from a source of calcium sulfate by further reducing the carbon footprint.

In order to solve this and other objects, the invention provides a method of producing calcium oxide from a raw material comprising a source of calcium sulfate, comprising:
- a first step of reducing a first portion of the calcium sulfate in the presence of a reducing agent in a reduction reactor to obtain calcium sulfide, wherein the reducing agent comprises hydrogen, and subsequently
- a second step of reacting the calcium sulfide and a second portion of the calcium sulfate with each other to obtain calcium oxide and sulfur dioxide.

Thus, the invention is based on the idea of using hydrogen as a reducing agent, so that the generation of carbon dioxide is reduced or completely eliminated, depending on whether the reducing agent consists of only hydrogen or whether the reducing agent is a mixture of hydrogen with another element. For example, the reducing agent consists of hydrogen only. Preferably, the reducing agent comprises 1-99 vol.-%, preferably 20-95 vol.-%, hydrogen. Using hydrogen as the reducing agent reduces or completely eliminates the generation of carbon dioxide in the first step of the method of the invention. Hydrogen is a highly effective reducing agent, capable of reducing calcium sulfate to calcium sulfide at relatively low temperatures. This reduces the overall energy requirements for the reducing step, making the process more energy-efficient. In addition, hydrogen is a clean reducing agent, producing only water vapor as a byproduct.

The reduction reaction for converting calcium sulfate to calcium sulfide is as follows:

CaSO₄ + 4 H₂ --> CaS + 4 H₂O

For the hydrogen to be used as a reducing agent, it must be added in a zone of the reduction reactor with only a small amount of oxygen, or at least where the amount of hydrogen added is higher than the stoichiometric ratio of hydrogen and oxygen that takes place during the combustion of hydrogen (H₂ + ½ O₂ --> H₂O). Otherwise, hydrogen would not be available for reducing calcium sulfate.

According to the invention, only a first partial amount (for example 20-35 wt.-%, preferably 29-35 wt.-%) of the calcium sulfate is converted to calcium sulfide in the first step. The second amount of calcium sulfate contained in the raw material is used in the second step to convert the calcium sulfide obtained in the first step to calcium oxide and sulfur dioxide according to the following reaction:

CaS + 3 CaSO₄ --> 4 CaO + 4 SO₂

Preferably, a mass fraction of the calcium sulfate of 0.05 to 0.8, more preferably 0.1 to 0.4 reacts to calcium sulfide in the first step and the second amount, which may be the remaining fraction, is used in the second step.

The second amount of the calcium sulfate preferably corresponds to the fraction of calcium sulfate that remains unreacted when it is withdrawn from the reduction reactor. Alternatively, only the first amount of the calcium sulfate is subjected to the first step and the second amount is introduced into the clinkerization reactor without passing through the reduction reactor.

An optional third step further comprises calcining the calcium oxide in the presence of silica, alumina, and iron oxide containing materials to obtain cement clinker. Preferably, the second step and/or the third are carried out in a clinkerization reactor. Silica, alumina and iron oxide are required to be present in the third step, such as in clinkerization reactor, because they react with calcium oxide and form clinker minerals, in particular alite (Ca3SiO5), belite (Ca2SiO4), tricalcium aluminate (Ca3Al2O6), and tetracalcium aluminoferrite (Ca4Al2Fe2O10). These corrective materials can be added to the raw material that is fed into the reduction reactor and/or added to the material stream that is transferred from the reduction reactor to the clinkerization reactor.

In another embodiment, the method of the invention does not comprise a step of calcining the calcium oxide in the presence of silica, alumina, and iron oxide containing materials to obtain cement clinker.

By carrying out the transformation of a calcium sulfate source into calcium oxide or cement clinker in a two-step process or a three-step process, respectively, and to conduct the first step in a separate reactor, each step may be optimized with respect to its process conditions, including atmosphere and temperature. The process conditions in the reduction reactor can be adjusted to the requirements of the corresponding chemical reactions, such as lower temperature and a reducing atmosphere. In contrast, the second step and/or the third step requires a higher temperature and an oxidizing atmosphere. Since an optimal temperature may be adjusted for each of the first and second steps, the energy efficiency of the overall process is increased.

Preferably, the first step is carried out at a temperature of 600-1100°C and the second step is carried out at a temperature of 1000-1450°C, preferably 1000-1349°C, and the third step may optionally be carried out at a temperature of 1350-1450°C. The first step may preferentially be carried out at a temperature of 600-800°C.

The first and the second steps are preferably carried out consecutively, without the temperature of the material feed withdrawn from the reduction reactor getting lower than 600-1100°C before the second step occurs. The two steps may alternatively also be separated in two locations. In that case the material feed withdrawn from the reduction reactor at the first location would need to be cooled down and transported to the second location.

It is desirable to transform the entire amount of calcium sulfate into calcium oxide, in order to avoid any uncontrolled amounts of calcium sulfate in the cement clinker, which would affect the properties of the final product. Therefore, it is preferable to provide the correct ratio of calcium sulfide to calcium sulfate in the second step, such as in the clinkerization reactor.

Preferably, a ratio of calcium sulfide and the second portion of the calcium sulfate present in the second step or in the clinkerization reactor is adjusted by controlling the reduction process taking place in the reduction reactor, said controlling preferably comprising at least one of adjusting the amount of hydrogen used in the reduction reactor as a reducing agent, adjusting the temperature in the reduction reactor and/or adjusting the residence time of the raw material in the reduction reactor.

The step of controlling the reduction process and/or clinkerization step can comprise measuring characteristics of the materials, such as SO3 content, calcium sulfide content, or clinker mineralogy. These measurements can be done routinely by XRD analysis or spectroscopy, either by taking samples at specific time intervals, e.g. every 20 minutes, or using online measurement systems.

Preferably, additional measurements of calcium sulfate and calcium sulfide are carried out on materials as they exit the reduction reactor to best control the entire process. Based on these measurements, the amount of hydrogen and oxygen injected into the reduction reactor, and the residence time of the materials in the reduction reactor, can be adjusted and optimized.

The composition of off-gasses withdrawn from the reduction reactor can also be analyzed, including determining at least one of the content of hydrogen, the content of sulfur dioxide, the content of oxygen and the step of controlling the reduction process is carried out as a function of said composition.

According to a preferred embodiment of the invention, thermal energy is provided to the first and/or the second and/or the third step, preferably to the reduction reactor and/or the clinkerization reactor, by combusting hydrogen. The combustion of hydrogen as a fuel source for heating the reactor(s) provides a clean and environmentally friendly alternative to conventional fossil fuels. Hydrogen combustion produces only water vapor as a byproduct, effectively eliminating the carbon dioxide emissions associated with traditional reactor heating methods.

According to another preferred embodiment of the invention, the reduction reactor is heated using electrical energy. For example, radiative electrical heat devices can be installed on the walls of the reduction reactor, and/or the hydrogen can be heated using electrical energy prior to entering the reduction reactor. The reduction reactor can also be heated using a combination of heat generated from electrical energy, and combustion of hydrogen.

With regard to the use of hydrogen in the reduction reactor, the following has to be noted. As discussed earlier, the reducing step, which involves the reaction between calcium sulfate and hydrogen to form calcium sulfide, is favored under a reducing atmosphere. On the other hand, the combustion of hydrogen to heat the reduction reactor requires an oxidizing atmosphere, typically achieved by supplying air or oxygen to support the combustion reaction. The combustion of hydrogen produces water vapor and releases a significant amount of heat, which is necessary to maintain the optimal temperature range for the reducing process.

To address this potential conflict, several strategies can be employed. One approach is to design the reduction reactor with distinct zones for combustion and reducing. The combustion zone can be located in a separate chamber or a specific region of the reactor where an oxidizing atmosphere is maintained. The heat generated from the combustion can then be transferred to the reducing zone. Another approach is to utilize hydrogen combustion for indirect heating of the reduction reactor. In this configuration, hydrogen is combusted in a separate combustion chamber or an external heating system, and the heat is transferred to the reduction reactor through heat exchange surfaces or a heat transfer medium. Yet another approach is to control the amount of oxygen added compared to the amount of hydrogen added in a form that the available amount of oxygen can only oxidize a part of the added hydrogen and the remaining hydrogen is reducing the CaSO4 to CaS.

Optionally, the hydrogen can be preheated prior to its introduction into the reduction reactor, so that the temperature within the reduction reactor remains constant and homogeneous throughout the volume of the reactor. Preferably, the hydrogen may be preheated to a temperature of at least 50°C, preferably at least 100°C, preferably at least 200°C.

Preferably, the hydrogen that is used as a reducing agent or that is used as a component of the reducing agent, has a purity of at least 90%, preferably at least 95 %, preferably at least 99%.

Preferably, steam is generated in the first step and withdrawn from the reduction reactor, wherein sensible heat is removed from the steam by means of a heat exchanger and used to preheat the hydrogen used as a reducing agent, and/or to preheat and dry the raw material prior to the first step.

Heating the reduction reactor and/or the clinkerization reactor may at least partly also be accomplished by electrical energy and/or by combusting biomass.

With regard to the reduction reactor, a preferred embodiment provides that a fuel, such as biomass, is combusted in the reduction reactor under a sub-stoichiometric atmosphere in order to provide heat to the reducing process and produce one or more secondary reducing agents, such as carbon monoxide. In addition to the combustion of said fuel, heat generated from electrical energy can be made use of. Carbon monoxide, a potent reducing agent, is then used to assist the reduction reaction by participating in the reducing process. It can react with calcium sulfate to produce calcium sulfide and carbon dioxide according to the following reaction:

CaSO₄ + 4 CO --> CaS + 4 CO₂

Various sources of calcium sulfate may be used as a starting material for the first step. In particular, the source of calcium sulfate may be gypsum, hemihydrate, waste calcium sulfate and/or phosphogypsum, the latter being widely available as it is most often landfilled in large quantities, being a byproduct of the production of phosphate-based fertilizers or phosphoric acid.

In order to maximize the surface to volume ratio of the calcium sulfate source, thereby increasing the efficiency of the reaction between the calcium sulfate source and the reducing agent during the first step, the source of calcium sulfate is preferably provided in the form of a powder, preferably having a maximum particle size of 300 µm. Herein, the particle size is measured by sieving.

Considering that some sources of calcium sulfate have a high content of free water, a preferred embodiment of the invention provides that the source of calcium sulfate is dried (dehydrated) to a water content of < 2 wt.-%, preferably less < 1 wt.-%, before being introduced into the reduction reactor.

Preferably, the sulfur dioxide obtained in the second step is withdrawn from the second step or the clinkerization reactor and used to produce sulfuric acid.

In particular, steam that is generated in the first step and withdrawn from the reduction reactor can advantageously be used to produce sulfuric acid from the sulfur dioxide.

In a preferred embodiment, the silica, alumina, and iron oxide containing materials comprise recycled or waste materials. In a preferred embodiment, the silica, alumina, and iron oxide containing materials comprise at least 40 wt.-% of recycled or waste materials.

The recycled or waste materials can be selected from any of the following materials: mineral waste materials from construction and demolition such as concrete demolition waste, recycled aggregates, recycled bricks, coal ashes, or steel slags. The use of waste and recycled materials decreases the environmental impact of this production process, by minimizing the need to use virgin materials.

Preferably, a heat exchanger is used in order to withdraw heat from the waste gas stream, the sulfur dioxide and/or the calcium oxide and/or the cement clinker, wherein the heat is preferably used to dry the source of calcium sulfate or the raw material mixture.

As mentioned above, the invention provides a two-step process to produce calcium oxide, wherein the first and the second step are carried out in two different and separate reactors. Preferably, a cement raw meal precalciner, situated below a preheater tower or one or more strings of suspension preheaters of a cement manufacturing plant operating according to the dry process, is used as the reduction reactor. This allows to use existing cement manufacturing plants for conducting the method of the invention.

The clinkerization reactor may preferably be designed as a rotary kiln. In particular, an existing rotary calcination kiln of a cement manufacturing plant may be used.

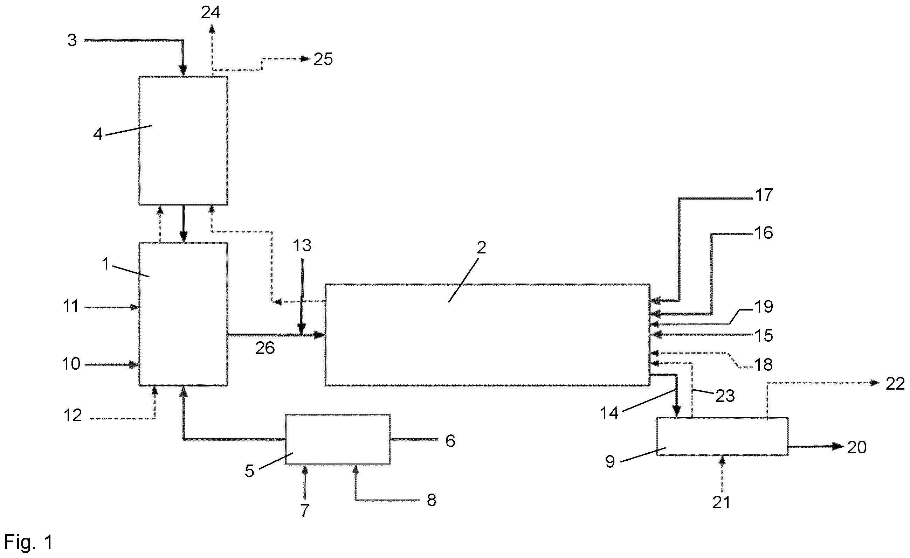

The invention will now be described by means of an exemplary embodiment illustrated in Fig. 1. The figure shows a reduction reactor 1 and a clinkerization reactor 2. The first step of the method according to the invention is carried out in the reduction reactor 1. The second step of the method according to the invention is carried out in the clinkerization reactor 2.

In the first step, a raw material 3 comprising a source of calcium sulfate is introduced into a material preheater 4, where it is preheated with the off-gasses coming from the reduction reactor 1 and/or the clinkerization reactor 2, as shown by dotted lines. The off-gasses may be withdrawn from the material preheater 4 at 24 or their thermal energy may optionally be reused in the system, as shown by 25. The preheated raw material is fed into the reduction reactor 1, where a first portion of the calcium sulfate is reduced by means of a reducing agent to obtain calcium sulfide. The reducing agent is hydrogen or a gas containing hydrogen. The reducing agent 6 is either directly fed into the reduction reactor 1 or, as shown in the embodiment of Fig. 1, optionally preheated in a preheater 5. In the preheater 5, the reducing agent 6 is preheated by, e.g., electrical energy 7 and/or waste heat 8 withdrawn from a waste heat source of the system, such as the material preheater 4, the cement clinker cooler 9, the reduction reactor 1 or the clinkerization reactor 2.

The temperature of the reduction reactor 1 is controlled to be in the range of 600-1100°C, preferably 600-800°C. The heat required to obtain this temperature range is generated by combusting a fuel 10, such as hydrogen and/or biomass. Alternatively or additionally, electric energy 11 may also be used to generate heat. Further, oxygen and/or air 12 can be introduced into the reduction reactor 1, in order to control the atmosphere and the temperature within the reduction reactor 1.

In the second step, the calcium sulfide obtained in the reduction reactor 1 together with the remaining portion of the calcium sulfate that has not been reduced in the reduction reactor 1, are fed into the clinkerization reactor 2 via a line 26. Corrective materials 13 including silica, alumina, and iron oxide containing materials, may be added to the feed. Alternatively, the optional corrective material may also be present in the raw material 3. In the clinkerization reactor 2, calcium sulfide and calcium sulfate are reacted to obtain calcium oxide, which is optionally further reacted with the corrective materials to obtain cement clinker. Cement clinker is withdrawn from the clinkerization reactor 2 via line 14 and cooled in the clinker cooler 9. The final cement clinker is withdrawn from the clinker cooler 9 as shown by reference numeral 20. Cooling of the cement clinker is carried out by introducing a cooling gas 21 into the clinker cooler 9. After having been in heat exchange with the cement clinker, the cooling gas 23 may be fed into the clinkerization reactor 2 for re-using its thermal energy. Further, off-gas 22 is withdrawn from the clinker cooler 9.

The clinkerization reactor 2 may be designed as a rotary kiln, which comprises a burner at its clinker outlet end for burning a fuel, such as hydrogen 15 or biomass 16. Alternatively or additionally, electric energy 17 may also be used to generate heat. Further, oxygen and/or air 18 can be introduced into the clinkerization reactor 2, in order to control the atmosphere within the clinkerization reactor 2. Optionally, dust 19 or powder of correctives may be added to the main burner of the clinkerization reactor 2 to improve radiation of the flame.

## Claims

1. A method of producing calcium oxide from a raw material (3) comprising a source of calcium sulfate, comprising
- a first step of reducing a first portion of the calcium sulfate in the presence of a reducing agent (6) in a reduction reactor (1) to obtain calcium sulfide, wherein the reducing agent comprises hydrogen, and subsequently
- a second step of reacting the calcium sulfide and a second portion of the calcium sulfate with each other to obtain calcium oxide and sulfur dioxide.

2. The method according to claim 1, further comprising a third step of calcining the calcium oxide in the presence of silica, alumina, and iron oxide containing materials to obtain cement clinker.

3. The method according to claim 2, wherein the second step and/or the third are carried out in a clinkerization reactor.

4. The method according to claim 1, 2 or 3, wherein the first step is carried out at a temperature of 600-1100°C and the second step is carried out at a temperature of 1000-1450°C, preferably 1000-1349°C, and the third step is preferably carried out at a temperature of 1350-1450°C.

5. The method according to any one of claims 1 to 4, wherein the source of calcium sulfate is gypsum, hemihydrate, waste calcium sulfate and/or phosphogypsum.

6. The method according to any one of claims 1 to 5, wherein thermal energy is provided to the first and/or the second and/or the third step, preferably to the reduction reactor (1) and/or the clinkerization reactor (2), by combusting hydrogen (10,15).

7. The method according to any one of claims 3 to 6, wherein the reduction reactor and/or the clinkerization reactor (2) is at least partially heated by electrical energy (10,15).

8. The method according to any one of claims 1 to 7, wherein a fuel, such as biomass (10), is combusted in the reduction reactor (1) under a sub-stoichiometric atmosphere in order to provide heat to the reducing process and produce one or more secondary reducing agents, such as carbon containing materials or carbon monoxide.

9. The method according to any one of claims 1 to 8, wherein a ratio of calcium sulfide and the second portion of the calcium sulfate present in the second step or in the clinkerization reactor (2) is adjusted by controlling the reducing process taking place in the reduction reactor (1), said controlling preferably comprising at least one of adjusting the amount of hydrogen used in the reduction reactor (1) as a reducing agent, adjusting the temperature in the reduction reactor to a temperature of 600-1000°C and adjusting the residence time of the raw material (3) in the reduction reactor (1).

10. The method according to claim 8, wherein the mineralogy of the cement clinker is analyzed by XRD or spectroscopy and the step of controlling is carried out as a function of said mineralogy of said clinker.

11. The method according to claim 9 or 10, wherein the composition of off-gasses withdrawn from the reduction reactor (1) is analyzed, including determining at least one of the content of hydrogen, the content of sulfur dioxide, the content of oxygen, and the content of carbon monoxide, and the step of controlling is carried out as a function of said composition.

12. The method according to any one of claims 1 to 11, wherein off-gasses generated in the first step are withdrawn from the reduction reactor (1), wherein sensible heat is removed from the off-gasses by means of a heat exchanger and used to preheat the hydrogen used as a reducing agent, and/or to dry the raw material (3) prior to the first step.

13. The method according to any one of claims 3 to 12, wherein the clinkerization reactor (2) is designed as a rotary kiln.

14. The method according to any one of claims 1 to 13, wherein the reduction reactor (1) is designed as a fluidized bed reactor, a packed bed reactor, or a fixed bed reactor.

15. The method according to any one of claims 3 to 14, wherein sulfur dioxide obtained in the first and/or second step is withdrawn from the clinkerization reactor (2) and used to produce sulfuric acid.

16. The method according to claim 15, wherein steam is generated in the first step and withdrawn from the reduction reactor (1) and used to produce sulfuric acid from the sulfur dioxide.

17. The method according to any one of claims 1 to 116 wherein the silica, alumina and iron oxide containing materials comprise recycled or waste materials.

18. The method according to claim 17, wherein the recycled or waste materials are selected from any of the following materials: mineral waste materials from construction and demolition such as concrete demolition waste, recycled aggregates, recycled bricks, coal ashes, steel slags, or other slags from metallurgic processes.

19. The method according to any one of claims 1 to 18, wherein a heat exchanger is used in order to withdraw heat from off-gasses generated in the first step, the sulfur dioxide generated in the first and/or second step, and/or the calcium oxide and/or the cement clinker, wherein the heat is preferably used to dry the raw material (3).

20. The method according to any one of claims 1 to 19, wherein the reducing agent comprises 1-99 vol.-%, preferably 20-99 vol.%, preferably 20-95 vol.-%, hydrogen.

21. The method according to any one of claims 1 to 20, wherein the weight ratio of the first portion of the calcium sulfate and the second portion of the calcium sulfate is 0.1-10, preferably 0.3-3.
